# EUROPEAN PATENT SPECIFICATION

(11) **EP 1 895 340 B1**
(45) Date of publication and mention of the grant of the patent: **27.07.2011**
(21) Application number: 07016906.5
(22) Date of filing: 29.08.2007
(51) Int. Cl.: G02B 6/44

(54) **A loose tube optical waveguide fiber cable**
Kabel für einen optischen Wellenleiter mit losen Hohladern
Câble de fibre de guide d'ondes optiques de gaine intermédiaire flottante

(30) Priority: 31.08.2006 WO PCT/NL2006/000439
(43) Date of publication of application: 05.03.2008
(73) Proprietor: Draka Comteq B.V., 1083 HJ Amsterdam (NL)
(72) Inventor: Nothofer, Klaus, 40699 Erkrath (DE); Lausch, Peter, 47803 Krefeld (DE)
(74) Representative: Blokland, Arie

(56) References cited:
- EP-A- 0 005 029
- WO-A-01/51554
- FR-A1- 2 497 964
- US-A- 4 420 220
- US-A- 6 167 178
- US-A1- 2004 151 906
- CORNING CABLE SYSTEMS: "FREEDM LST Gel-Free Cables"[Online] October 2005 (2005-10), pages 1-4, XP002421290 USA Retrieved from the Internet: URL:http://www.corningcablesystems.com/web /library/litindex.nsf/$all/LAN-87-EN/$file /LAN-87-EN.pdf> [retrieved on 2007-02-20]

## Description

The present invention relates to a loose tube optical waveguide fiber cable which is suitable for riser or plenum applications.

Optical waveguide fibers are normally provided with a plastic protective coating applied by the fiber manufacturer directly over the cladding in order to protect the fiber. In tight buffered cables, a protective tube is applied by the cable manufacturer directly to the outer surface of the fiber coating applied by the fiber manufacturer so that the fiber and the tube are in contact along substantially their length. In loose tube or composite buffer constructions, the coated optical fiber is separated from the protective tube.

FR 2 497 964 relates to an optical fibre cable comprising from inwards to outwards one or more optical fibres, a tube of plastic material, a layer of strength elements and an outer jacket.

US patent number 5.627.932 relates to a single optical waveguide fiber having an outer coating, a layer of loose tensile fibers surrounding the optical waveguide fiber outer coating, and a tubular jacket of plastic material surrounding the layer of loose tensile fibers, said cable containing no gel-like compounds. The layer of loose tensile strength fibers, such as Kevlar aramid fibers, is twisted around the buffered optical fibers, and an outer jacket of plastic material is extruded around the layer of said strength fibers.

US patent number 7.035.511 relates to a protective casing for an optical waveguide fiber including an outer tubing, an inner tubing with a passageway therethrough and a layer of strength members. The outer tubing is preferably PVC and the materials for the inner tubing can include suitable grades of polyetherimide, polyetheretherketone, or fluoroplastic THV. The layer of strength members is positioned between the outer tubing and the inner tubing for carrying any applied tensile load and these strength members are aramid fibers or fiberglass fibers that allow flexibility while providing the necessary tensile strength. The layer of strength members is a plurality of strands of aramid yarn that are wrapped about the outer surface of the inner tubing during manufacture. The protective casing is thus made of three separate materials, i.e. the polyetherimide inner tubing, the aramid strength fibers and the PVC outer tubing.

US patent 6.091.871 relates to a reinforced optical fiber cable comprising a protective tube for protecting optical fibers and a reinforcing layer and reinforcing rods around the protective tube together with an outer sheath. To protect the optical fibers against penetration of moisture the inside space in which the optical fibers are present contains a filler material. Besides the strengthening rods, which are embedded in the sheath, parallel to the axis of the cable, a reinforcing layer is present between the tubular structure and the outer sheath, this reinforcing layer is constituted by wires or elements having a high traction strength, i.e. made of aramid, glass fibers of fibers reinforced plastic (FRP) material, which are wound helically around the tubular structure.

European patent application 0 005 029 relates to an optical fiber unit consisting of a tubular sheath surrounding optical fibers, the sheath being reinforced by two steel wires, which are embedded in the tube wall, diametrically opposited to one another, and which extend continuously along the whole length of the sheath, wherein the sheath is made of polyethylene.

US patent 5.627.932 relates to a tight buffered optical fiber cable containing optical fiber surrounded by a coating applied directly over the optical fiber. A layer of loose tensile strength members is applied over the buffered optical fiber, and an outer polymer tubular jacket is extruded over the aforementioned layer, wherein the outer jacket is formed of PVC material.

One disadvantage of the optical fiber cables according to the prior art is that the tight buffered fibers and the central filled loose tubes are expensive, and to access the fibers is a time consuming process. In addition, especially when a normally jelly filled central loose tube is used, fiber cleaning is necessary.

In view of the foregoing state of the art, it is therefore an object of the present invention to provide a loose tube optical waveguide fiber cable which is suitable for fixed inhouse cabling and shall comprise low-cost for large-scale installation of fiber-to-the-home (FTTH).

Another object of the present invention is to provide a loose tube optical waveguide fiber cable wherein the fiber access time is reduced substantially compared to the standard cables elements.

These and other objects are provided, according to the present invention, by providing a loose tube optical waveguide fiber cable, according to claim 1.

In order to maintain sufficient crush, impact and cut-through resistance, it is preferred that the inner diameter of the protective tube is around 1 mm, wherein the outer diameter shall be around 4 mm. The optical waveguide fibers have a typical diameter of about 0.250 mm. To ensure easy installation in difficult environments, the loose tube optical waveguide fiber cable according to the present invention comprises strengthening yarns which are embedded in the protective tube. This means that there no other materials or elements present in the space between the optical waveguide fibers and the inner surface of the protective tube. The present cable is totally dry (gel-free) and shall comprise a minimum static bend radius of 25 mm with standard single mode fibers, and of 10 mm with low bend loss fibers. The wall thickness of the protective tube is in a range of 0,3 - 0.45, especially 0,35 - 0,45, times the outer diameter of the tube. The material of the protective tube is formed of a flame-retardant material. The protective tube is made of a uniform material, i.e. its composition throughout the wall thickness is the same. The protective tube is a single layer tube. Such an cable is to be installed in a plenum or riser application. The term "loose" as used herein is to be understood that the optical fibers have a freedom of movement within the cavity in both radial and axial directions. Such a freedom of movement of optical fiber waveguides within the protective tube is advantageous in that it reduces optical losses in the waveguides in operation.

Fiber access is very easy due to the use of halogen free fire retardant sheathing material made of thermoplastics with a high degree of anorganic fillers, as this material breaks easily when an initial cut is made.

In a preferred embodiment of the present invention the material of the protective tube is a flame retardant material with a high degree of inorganic fillers, i.e. density of > 1,35 g/cm³. In addition the inner diameter of said protective tube is at least 0,5 mm greater than the diameter of the closest circle around the two or more optical waveguide fibers.

For the cable with a layer of strength elements between the inner and outer part of the sheath, cut a short piece (about 10 cm) of the sheath by circular cut with conventional cable knife down to the strength elements and pull it away. Then grip the strength yarns and use it as ripcord to open the desired length of the outer sheath portion. In another embodiment of the cable, especially when a high amount of strength elements is used, a part of the strength elements is designated as ripcord, e.g. by different colour or material. Depending on the wall thickness, the inner part of the sheath can be either removed by finger tips, or with conventional cable or fibre stripper. Because of the absence of any filling compound in the tube this can be done in one operation over the desired length.

The method for manufacturing the loose tube optical waveguide fiber cable is similar to buffer tube extrusion at standard secondary coating lines. For maintaining certain values of excess fibre length the fibre pay off is equipped with tension control device. Typical values are around 0.5 to 2 N. The fibres passes the extruder crosshead. The extruder is typically equipped with special designed screw, breaker, crosshead and tooling for the needs of flame retardant material.

The strength-members could be applied either by guiding tubes, which guides the yarns directly into the flow channel of the crosshead and the plastic material is encapsulating the strength members before leaving the crosshead. Another way is to use two extruders and the strength yarns will be applied onto the tube leaving the first extruder before entering the second one. Adjacent to the first cooling section a pull-off capstan or similar device is located The cable is turned at least with 1 turn - typically 2 to 4 turns- around the capstan. This capstan is mandatory because due to the lack of filling compound the capstan is coupling the fibres to the tube. Also the distance between crosshead and capstan is affecting the excess fibre length, as well as cooling conditions and the tension controlled between capstan and downstream pulling device and between pulling device and take-up.

Examples of the materials which can be used for the protective tube are DRAKA DHF9822, DHF9761 and Scapa MEGOLON S 550. Those materials are in general composed of polymers or copolymers of polyolefins, -also other plastic materials such as EVA, polyamides or polyphenyleneester might be suitable- filled with mineral fillers (i.e. aluminium hydroxide, magnesium hydroxide) to give the desired level of flame retardance . Typically they contain also additional components such as UV- stabilizers, antioxidants, colour pigments and processing additives. The protective tube according to the present invention is a one single layer protective tube.

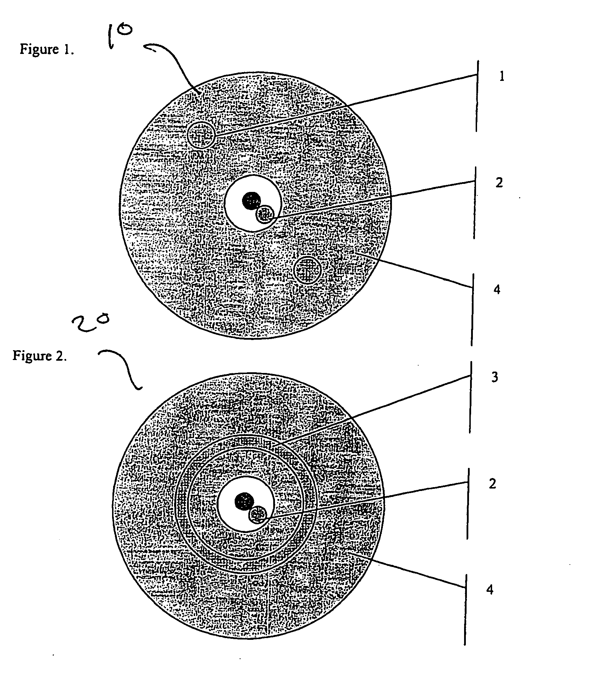

The accompanying drawings, which are incorporated and constitute part of the specification, illustrate the preferred embodiment of the invention in figure 2 , and together with the description, serve to explain the principles of the invention. It is to be understood, of course, that both drawings and the descriptions are explanatory only and are not restricted to the invention. Like numbers refer to the like elements throughout. The drawings are not necessarily drawn to scale but are configured to clearly illustrate the invention.

A loose tube optical waveguide fiber cable 10 may be constructed as shown in Figures 1 and 2. The embodiment of figure 1 is not according to the present invention. Cable 10 contains two optical fibers 2 surrounded by a coating (not shown) applied directly over the optical fiber 2. The number of optical fiber 2 is not restricted to two but a higher number can be used as well. There are no filling gels, swellable materials, etc. present in the space between the optical fibers 2 and the inner diameter of the protective tube. Optical fiber 2 may contain a core and a cladding surrounding the core, with one or more polymer coatings applied over the cladding. A protective tube 4 loosely surrounds the optical fibers 2. The cable 10 has strengthening elements 1 that are relatively soft and that have high traction strength, which are embedded in the sheath 4, parallel to the axis of the cable, i.e. between the inner surface of the protective tube 4 and the outer surface of protective tube 4. These strengthening elements 1 may be made of reinforced plastics material, glass or aramid yarns, or steel. There are two such elements 1 in the embodiment shown, in which they are opposite each other. In another embodiment (not shown) there could be four of them, in which case they would be symmetrical in pairs about a diametral plane of the cable being at a small distance from said plane.

An embodiment of the present invention is seen in Figure 2. In the protective tube or sheath 4 is located a layer of strengthening element 3, which strengthening element 3 extends over substantially the whole length of cable 20, parallel to the axis of the cable 20. The layer of strengthening element 3 surrounds the cavity wherein only the optical fiber 2 is present. In this cavity there are no filling gels, swellable materials or other strengthening members present. The cavity is of a "dry" structure. The strengthening element 3 is embedded in sheath 4, which sheath 4 is of a uniform material, i.e. the inner surface of the strengthening element 3 is in contact with the same sheath material 4 as is the outer surface of strength member 3. This construction is in contrast with the protective casing as disclosed in US patent 7.035.511, wherein a layer of strength members is positioned between an inner tubing and an outer tubing wherein the material of the inner tubing is different from that of the outer tubing.

## Claims

1. A loose tube optical waveguide fiber cable (10) of circular cross section, comprising
(a) two or more optical waveguides (2), and
(b) a protective tube (4) loosely surrounding said two or more optical waveguides (2), said tube (4) comprising a single cavity, an inner surface and an outer surface, said cable (10) containing no gel-like compounds, and
(c) one or more strengthening members being disposed between the inner surface of the protective tube and the outer surface of the protective tube as a layer of strengthening element (3), wherein said one or more strengthening members extend continuously along the length of the protective tube (4), **characterised in that** the strength members are strength yarns for use as a ripcord and wherein the wall thickness of the protective tube (4) is in the range of 0,3 to 0,45 times the outer diameter of the protective tube (4).

2. A loose tube optical waveguide fiber cable (10) according to claim 1, wherein the material of the protective tube (4) is a halogen free flame retardant polymer.

3. A loose tube optical waveguide fiber cable (10) according to anyone of the proceeding claims, wherein the inner diameter of said protective tube (4) is at least 0,5 mm greater than the diameter of the closest circle around the two or more optical waveguide fibers (2).

4. A loose tube optical waveguide fiber cable (10) according to claim 1, wherein the wall thickness of the protective tube (4) is in the range of 0,35 to 0,45 times the outer diameter of the protective tube (4).

## Patentansprüche

1. Lichtwellenleiterfaserkabel (10) mit kreisrundem Querschnitt, das lose in ein Rohr eingelegt ist und Folgendes aufweist:
(a) zwei oder mehr Lichtwellenleiter (2), und
(b) ein Schutzrohr (4), das die zwei oder mehr Lichtwellenleiter (2) lose umgibt, wobei das Schutzrohr (4) einen einzigen Hohlraum, einen Innendurchmesser und einen Außendurchmesser aufweist, wobei das Kabel (10) keine gelartigen Verbindungen enthält, und
(c) ein oder mehrere Verstärkungsteile, die zwischen der Innenfläche des Schutzrohrs und der Außenfläche des Schutzrohrs als eine Lage eines Verstärkungselements (3) angeordnet sind, wobei sich das eine oder die mehreren Verstärkungsteile durchgehend entlang der Länge des Schutzrohrs (4) erstrecken, **dadurch gekennzeichnet, dass** die Verstärkungsteile Verstärkungsfäden zur Verwendung als Reißschnur sind, wobei die Wanddicke des Schutzrohrs (4) im Bereich des 0,3- bis 0,45-fachen des Außendurchmessers des Schutzrohrs (4) liegt.

2. Lichtwellenleiterfaserkabel (10) nach Anspruch 1, das lose in ein Rohr eingelegt ist, wobei das Material des Schutzrohrs (4) ein halogenfreies, flammfestes Polymer ist.

3. Lichtwellenleiterfaserkabel (10) nach einem der vorhergehenden Ansprüche, das lose in ein Rohr eingelegt ist, wobei der Innendurchmesser des Schutzrohrs (4) um mindestens 0,5 mm größer ist als der Durchmesser des engsten Kreises um die zwei oder mehr Lichtwellenleiterfasern (2).

4. Lichtwellenleiterfaserkabel (10) nach Anspruch 1, das lose in ein Rohr eingelegt ist, wobei die Wanddicke des Schutzrohrs (4) im Bereich des 0,35- bis 0,45-fachen des Außendurchmessers des Schutzrohrs (4) liegt.

## Revendications

1. Câble de fibre de guide d'ondes optiques à tube flottant (10) de section circulaire, comprenant
(a) deux guides d'ondes optiques (2) ou plus, et
(b) un tube protecteur (4) entourant de façon flottante lesdits deux guides d'ondes optiques (2) ou plus, ledit tube (4) comprenant une cavité unique, une surface interne et une surface externe, ledit câble (10) ne contenant aucun composé de type gel, et
(c) un ou plusieurs organes de renfort disposés entre la surface interne du tube protecteur et la surface externe du tube protecteur sous la forme d'une couche d'élément de renfort (3), ledit ou lesdits organes de renfort s'étendant en continu suivant la longueur du tube protecteur (4), **caractérisé en ce que** les organes de renfort sont des fils de renfort à utiliser comme fil de déchirement, où l'épaisseur de paroi du tube protecteur (4) est dans la plage de 0,3 à 0,45 fois le diamètre externe du tube protecteur (4).

2. Câble de fibre de guide d'ondes optiques à tube flottant (10) selon la revendication 1, dans lequel le matériau du tube protecteur (4) est un polymère ignifuge sans halogène.

3. Câble de fibre de guide d'ondes optiques à tube flottant (10) selon l'une quelconque des revendications précédentes, dans lequel le diamètre interne dudit tube protecteur (4) est au moins 0,5 mm plus grand que le diamètre du cercle le plus proche autour des deux guides d'ondes optiques (2) ou plus.

4. Câble de fibre de guide d'ondes optiques à tube flottant (10) selon la revendication 1, dans lequel l'épaisseur de paroi du tube protecteur (4) est dans la plage de 0,35 à 0,45 fois le diamètre externe du tube protecteur (4).
